(19) Europäisches Patentamt
European Patent Office
Office européen des brevets

(11) **EP 2 784 546 B1**

(12) **FASCICULE DE BREVET EUROPEEN**

(45) Date de publication et mention de la délivrance du brevet:
**02.09.2015 Bulletin 2015/36**

(51) Int Cl.:
***G01S 19/21*** (2010.01)     ***G01S 19/53*** (2010.01)

(21) Numéro de dépôt: **14160753.1**

(22) Date de dépôt: **19.03.2014**

(54) **Procédé de formation de faisceau signaux d'un récepteur de signaux d'un système de navigation par satellites pour améliorer la résistance au brouillage**

Verfahren zum Bilden eines Strahlsignals in einem Signalempfänger, Satellitennavigationssystem Störfestigkeit zu verbessern

A method of forming a beam signal in a signal receiver satellite navigation system to improve interference resistance

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.03.2013 FR 1300714**

(43) Date de publication de la demande:
**01.10.2014 Bulletin 2014/40**

(73) Titulaire: **Thales**
**92200 Neuilly Sur Seine (FR)**

(72) Inventeurs:
• **Martin, Nicolas**
**26500 Bourg Les Valence (FR)**
• **Perre, Jean-Michel**
**07130 St Peray (FR)**
• **Chopard, Vincent**
**07300 Mauves (FR)**

(74) Mandataire: **Brunelli, Gérald et al**
**Marks & Clerk France**
**Immeuble Visium**
**22, avenue Aristide Briand**
**94117 Arcueil Cedex (FR)**

(56) Documents cités:
**EP-A1- 2 500 750**     **US-A- 6 018 315**
**US-A1- 2002 169 578**

**Description**

La présente invention porte sur un procédé de formation de faisceau signaux d'un récepteur de signaux d'un système de navigation par satellites pour améliorer la résistance au brouillage, et sur un récepteur associé.

La radionavigation par satellites permet d'obtenir la position d'un récepteur par une résolution voisine de la triangulation, utilisant les pseudo-distances mesurées à partir des signaux envoyés par les satellites.

La détermination de l'attitude d'un aéronef à partir de signaux d'un système de navigation par satellites ou GNSS pour acronyme de "Global Navigation Satellite System" en langue anglaise, reçus sur plusieurs capteurs d'antenne fait partie de l'état de l'art. Les techniques mises en oeuvre sont basées sur le principe de la radiogoniométrie connue de longue date.

Les premières méthodes utilisées mettent en oeuvre des mesures de phase de porteuse produites par des traitements de signaux indépendants entre les capteurs d'antenne et entre les satellites, avec un levé d'ambiguïté permettant de déterminer les coordonnées en repère Terrestre centré ou repère ECEF pour acronyme de "Earth Centrered Earth Fixed" en langue anglaise, ou en repère TGL (Trièdre Géographique Local, repère Nord, Est, Vertical centré sur la position du récepteur) de chaque vecteur reliant deux centres de phase de deux capteurs.

Ces méthodes sont adaptées lorsque le but est de déterminer une attitude précise avec une architecture simple (pas de traitement spécifique du signal). Pour obtenir une précision suffisante, on utilise des capteurs éloignées de plusieurs fois la longueur d'onde (on parle alors de plusieurs antennes), au détriment du levé d'ambiguïté plus difficile à réaliser (risque d'erreurs). Ces méthodes n'offrent pas d'amélioration particulière en terme de résistance au brouillage.

D'autres solutions utilisent une détermination des directions d'arrivée des signaux dans un repère lié à l'antenne basée sur les méthodes MUSIC pour acronyme de "MUltiple SIgnal Classification" ou ESPRIT pour acronyme de "Estimation of Signal Parameters via Rotationnal Invariance Techniques", effectuée satellite par satellite, avec un traitement spécifique du signal. Ensuite le récepteur détermine les angles d'attitude donnant, par calcul à partir des directions des satellites en repère TGL, les mêmes directions d'arrivée dans un repère lié à l'antenne que celles obtenues grâce aux signaux reçus.

Cette étape consiste en une recherche sur les angles d'attitudes avec un critère de vraisemblance calculé en comparant des directions d'arrivée mesurées et calculées. Cette recherche peut être accélérée grâce à la méthode du gradient.

Ces méthodes sont plus adaptées à des antennes à formation de diagramme de rayonnement ou CRPA pour "Controlled Reception Pattern Antenna" en langue anglaise, avec des capteurs plus nombreux (au moins 4) et rapprochés. Elles ne visent pas à améliorer la robustesse au brouillage.

Dans un récepteur de signaux GNSS, la détermination de l'attitude peut servir plusieurs buts, tels la détection d'un leurrage, la détermination de la direction d'un brouilleur en repère TGL, ou la formation de faisceau.

La formation de faisceau consiste à effectuer, pour chaque direction de satellite, une somme pondérée des signaux des différents capteurs de l'antenne, de manière à maximiser la puissance du signal utile reçu du satellite et donc obtenir un meilleur rapport signal à bruit dans les boucles de poursuite. La formation de faisceau permet de minimiser le bruit sur les mesures, de réduire l'effet des multi-trajets (signaux réfléchis arrivant de directions différentes) et d'augmenter la résistance au brouillage des boucles de poursuite.

La formation de faisceau nécessite de connaître la direction des satellites dans un repère lié à l'antenne pour calculer les coefficients de pondération complexes des sommes pondérées. Dans le cas idéal le récepteur dispose d'une aide inertielle qui lui permet de connaître l'attitude de l'antenne en repère TGL et donc de calculer la direction des satellites en repère antenne à partir des positions des satellites en TGL calculables grâce aux almanachs transmis via les signaux satellites.

Il est connu le document US 2002/169578 A1 qui divulgue un procédé de formation de faisceau de signaux d'un récepteur de signaux d'un système de navigation par satellites pour améliorer la résistance au brouillage, le récepteur étant muni d'une antenne à plusieurs capteurs à rayonnement contrôlé.

Un but de l'invention est de déterminer l'attitude de l'antenne pour réaliser la formation de faisceau sans avoir besoin d'aide externe.

Le principe de l'invention est de retrouver directement les angles d'attitude de l'antenne à partir des signaux reçus sans passer par la détermination des directions d'arrivées des signaux satellites.

Il est proposé, selon un aspect de l'invention, un procédé de formation de faisceau signaux d'un récepteur de signaux d'un système de navigation par satellites pour améliorer la résistance au brouillage, le récepteur étant muni d'une antenne à plusieurs capteurs à rayonnement contrôlé, comprenant une étape consistant à déterminer l'attitude de l'antenne dans un repère TGL centré sur le récepteur, par détermination itérative des angles d'attitude de l'antenne donnant le maximum de la somme des énergies des sommes pondérées des signaux reçus par les capteurs en sortie des corrélateurs des canaux de traitement respectivement associés aux satellites, les coefficients de pondération des sommes pondérées étant calculés à partir des angles d'attitude considérés à chaque itération et des positions des satellites connues en repère TGL.

Les positions des satellites en repère TGL peuvent, par exemple, être connues grâce aux almanachs transmis via les signaux des satellites

Ainsi, on n'a pas besoin d'aide externe au récepteur, qui nécessiterait des équipements coûteux et encombrants.

Dans un mode de mise en oeuvre, on utilise des discriminateurs de paramètres représentatifs des directions d'arrivée des signaux satellites dans un repère lié à l'antenne.

Ainsi, on tire avantage de la redondance des satellites pour résoudre les angles d'attitude et on améliore la robustesse au brouillage.

Selon un mode de mise en oeuvre, lesdits paramètres représentatifs des directions d'arrivée des signaux satellites dans un repère lié à l'antenne comprennent des cosinus directeurs ou des angle de site et d'azimut.

Dans un mode de mise en oeuvre, on utilise une méthode à modèle d'observation de la relation entre les paramètres représentatifs des directions d'arrivée des signaux satellites et les angles d'attitude de l'antenne.

Ainsi, on peut résoudre directement les angles d'attitude sans passer par la détermination des directions des satellites en repère lié à l'antenne, et donc bénéficier pleinement de la redondance des satellites pour améliorer la robustesse au brouillage.

Selon un mode de mise en oeuvre, la résolution dudit modèle d'observation met en oeuvre un filtrage de Kalman ou une méthode par moindres carrés.

Il est proposé, selon un autre aspect de l'invention, un récepteur de signaux d'un système de navigation par satellites, muni d'une antenne à capteurs à rayonnement contrôlé, comprenant des moyens de formation de faisceaux pour améliorer la résistance au brouillage, comprenant des moyens de détermination de l'attitude de l'antenne dans un repère TGL centré sur le récepteur, par détermination itérative des angles d'attitude de l'antenne donnant le maximum de la somme des énergies des sommes pondérées des signaux reçus par les capteurs en sortie des corrélateurs des canaux de traitement respectivement associés aux satellites, les coefficients de pondération des sommes pondérées étant calculés à partir des angles d'attitude considérés à chaque itération et des positions des satellites connues en repère TGL.

L'invention sera mieux comprise à l'étude de quelques modes de réalisation décrits à titre d'exemples nullement limitatifs et illustrés par les dessins annexés sur lesquels :

- la figure 1 illustre les angles d'Euler;
- la figure 2 illustre une antenne à quatre capteurs;
- la figure 3 illustre une démodulation avec formation de faisceau et boucles de poursuite;
- la figure 4 illustre une démodulation avec formation de faisceau et discriminateur des cosinus directeurs
- la figure 5 illustre schématiquement le procédé selon un aspect de l'invention;
- et la figure 6 illustre un récepteur selon un aspect de l'invention.

En fait, le procédé revient à chercher les angles d'attitude donnant le maximum de la somme sur tous les satellites des énergies des sommes pondérées des signaux. Ce procédé utilise un filtre de Kalman étendu qui permet de résoudre la relation non linéaire entre les angles d'Euler et les signaux en sortie de démodulation.

Du fait que l'on a moins d'inconnues à résoudre (3 angles au lieu de 2 angles par satellite) pour le même nombre total de mesures cette solution est plus robuste au brouillage que la méthode consistant à rechercher les directions d'arrivée des signaux satellite par satellite. Elle permet donc de continuer à faire de la formation de faisceau avec un niveau de brouillage plus important.

On calcule la position des satellites ($X_{n\,TGL}$, $Y_{n\,TGL}$, $Z_{n\,TGL}$) dans un premier repère TGL (Trièdre Géographique Local, repère Nord, Est, Vertical centré sur la position du récepteur) centré sur le récepteur à partir de la position du récepteur et de la position du satellite. Les positions des satellites sont connues grâce aux éphémérides ou aux almanachs, contenus dans les messages de navigation transmis par les signaux émis par les satellites.

Le vecteur directeur entre l'antenne du récepteur et le satellite d'indice n du système de navigation par satellites, dans le premier repère TGL, est égal par définition à :

$$\vec{u}_{n\,TGL} \overset{def}{=} \begin{bmatrix} X_{n\,TGL} \\ Y_{n\,TGL} \\ Z_{n\,TGL} \end{bmatrix} / \rho$$

Le dénominateur $\rho$ représente la distance séparant l'antenne du récepteur et le satellite n, indépendante du repère :

$$\rho \overset{def}{=} \sqrt{X_n{}^2 + Y_n{}^2 + Z_n{}^2} = \sqrt{X_{nTGL}{}^2 + Y_{nTGL}{}^2 + Z_{nTGL}{}^2}$$

Dans l'ensemble de la présente demande, la présence d'un indice « def » au-dessus d'un signe d'égalité dans une expression mathématique signifie une égalité par définition et non par conséquence.

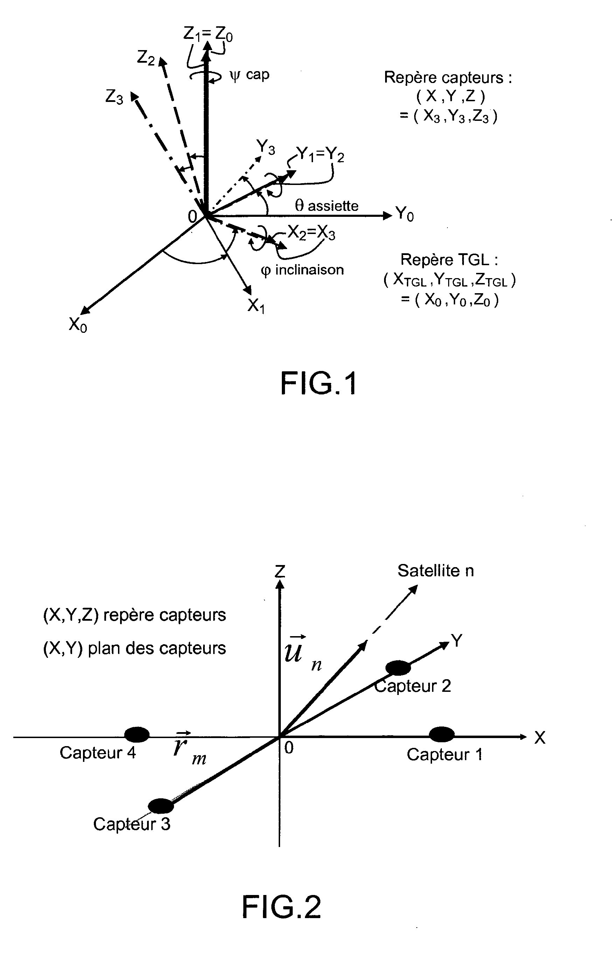

On représente, comme sur la figure 1, l'attitude de l'antenne par rapport au premier repère TGL grâce aux angles d'Euler : Cap ($\psi$), Assiette ($\theta$) et Inclinaison ($\varphi$). Ces angles permettent de construire la matrice de changement de repère M($\psi$, $\theta$, $\varphi$) du premier repère TGL au deuxième repère lié à l'antenne ou aux capteurs d'antenne (idem) :

$$M(\psi,\theta,\varphi) \overset{def}{=} \begin{bmatrix} 1 & 0 & 0 \\ 0 & \cos\varphi & -\sin\varphi \\ 0 & \sin\varphi & \cos\varphi \end{bmatrix} \begin{bmatrix} \cos\theta & 0 & -\sin\theta \\ 0 & 1 & 0 \\ \sin\theta & 0 & \cos\theta \end{bmatrix} \begin{bmatrix} \cos\psi & \sin\psi & 0 \\ -\sin\psi & \cos\psi & 0 \\ 0 & 0 & 1 \end{bmatrix}$$

$$\begin{bmatrix} X_{capteur} \\ Y_{capteur} \\ Z_{capteur} \end{bmatrix} = M(\psi,\theta,\varphi) . \begin{bmatrix} X_{TGL} \\ Y_{TGL} \\ Z_{TGL} \end{bmatrix}$$

Le vecteur directeur entre l'antenne du récepteur et le satellite d'indice n du système de navigation par satellites, dans le deuxième repère lié à l'antenne, est égal par définition à :

$$\vec{u}_{n\,capteur} \overset{def}{=} \begin{bmatrix} X_{n\,capteur} \\ Y_{n\,capteur} \\ Z_{n\,capteur} \end{bmatrix} / \rho$$

Le dénominateur $\rho$ représente la distance séparant l'antenne du récepteur et le satellite n, indépendante du repère :

$$\rho = \sqrt{X_n{}^2 + Y_n{}^2 + Z_n{}^2} = \sqrt{X_{n\,capteur}{}^2 + Y_{n\,capteur}{}^2 + Z_{n\,capteur}{}^2}$$

On peut ainsi exprimer le vecteur directeur du satellite d'indice n en fonctions des angles d'Euler :

$$\vec{u}_{n\,capteurs}(\psi,\theta,\varphi) = M(\psi,\theta,\varphi) . \vec{u}_{n\,TGL}$$

$$\vec{u}_{n\,capteurs}(\psi,\theta,\varphi) \overset{def}{=} \begin{bmatrix} ux_n(\psi,\theta,\varphi) \\ uy_n(\psi,\theta,\varphi) \\ uz_n(\psi,\theta,\varphi) \end{bmatrix}$$

On peut aussi représenter la direction du satellite d'indice n par les angles de site ($\sigma$) et d'azimuth ($\gamma$) :

$$\vec{u}_{n\,capteurs}(\psi,\theta,\varphi) \overset{def}{=} \begin{bmatrix} \cos(\gamma_n).\cos(\sigma_n) \\ \sin(\gamma_n).\cos(\sigma_n) \\ \sin(\sigma_n) \end{bmatrix}$$

$$\sigma_n(\psi,\theta,\varphi) = sin^{-1}(\ uz_n(\psi,\theta,\varphi)\ )$$

$$\gamma_n(\psi,\theta,\varphi) = tan^{-1}(\ ux_n(\psi,\theta,\varphi)\ ,\ uy_n(\psi,\theta,\varphi)\ )$$

Les déphasages supposés des signaux reçus entre les capteurs d'antenne sont calculés à partir des angles de site et d'azimut supposés.

La différence de chemin optique entre le centre du deuxième repère antenne et le capteur d'indice m pour le signal reçu du satellite n s'exprime comme suit :

$$\varepsilon_{m,n}(\psi,\theta,\varphi) \overset{def}{=} \vec{u}_{n\ capteurs}(\psi,\theta,\varphi)\ .\ \vec{r}_{m\ capteurs} \qquad \text{(en m)}$$

Le déphasage correspondant s'exprime comme suit :

$$\delta_{m,n}(\psi,\theta,\varphi) \overset{def}{=} \vec{u}_{n\ capteurs}(\psi,\theta,\varphi)\ .\ \vec{r}_{m\ capteurs}\ .\ (2\pi/\lambda) \qquad \text{(en rad)}$$

$\lambda$ représentant la longueur d'onde de la porteuse

En notant $\vec{r}_{m\ capteurs} \overset{def}{=} \begin{bmatrix} X_{m\ capteur} \\ Y_{m\ capteur} \\ Z_{m\ capteur} \end{bmatrix}$ le vecteur position du capteur m en repère capteurs, connu par exemple grâce à des mesures de centre de phase en usine, dans un exemple à quatre capteurs d'antenne, on a :

$$\vec{r}_{1\ capteurs} = \begin{bmatrix} r \\ 0 \\ 0 \end{bmatrix} \qquad \vec{r}_{2\ capteurs} = \begin{bmatrix} 0 \\ r \\ 0 \end{bmatrix} \qquad \vec{r}_{3\ capteurs} = \begin{bmatrix} -r \\ 0 \\ 0 \end{bmatrix} \qquad \vec{r}_{4\ capteurs} = \begin{bmatrix} 0 \\ -r \\ 0 \end{bmatrix}$$

comme illustré sur la figure 2.

La démodulation des signaux, numérisés à la fréquence d'échantillonnage Fe, est réalisée de manière matérielle, dans un composant numérique "câblé", ASIC ou FPGA. Elle demande une fréquence de calcul très élevée, difficile à réaliser de manière logicielle. La démodulation est propre à chaque signal satellite, caractérisé par son code d'étalement et son Doppler. Dans la présente demande, on démodule tous les signaux reçus par les capteurs en parallèle dans chaque canal satellite matérielle.

La démodulation procède par multiplication du signal reçu par une porteuse locale complexe et par un code local réel puis intégration du produit par intervalles de temps consécutifs (c'est la corrélation). On a en fait deux voies de corrélation par signal reçu : une voie ponctuelle avec un code local en phase avec le code reçu et une voie delta avec un code "delta" ou différence entre code avancé et code retardé, selon l'état de l'art.

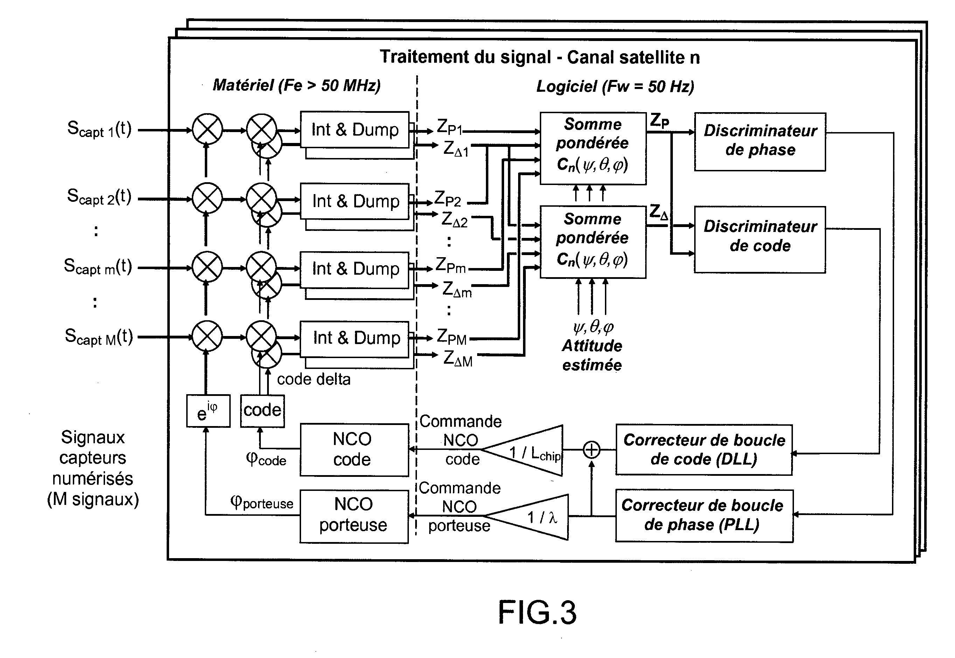

La figure 3 représente un exemple de démodulation avec les boucles de poursuite.

Les sommes pondérées des signaux démodulés des différents capteurs sont réalisées en logiciel à basse fréquence (typiquement Fw = 50 Hz).

Les coefficients de pondération complexes ont pour rôle de mettre en phase les signaux des capteurs en sortie des voies de corrélation dans le but d'avoir le maximum d'amplitude après la somme.

On utilise les directions des satellites calculées à partir des angles d'Euler supposés pour déterminer les coefficients de pondération.

Les résultats en sortie des corrélateurs avant pondération s'écrivent :

$$Z_{P\,capteurs} \stackrel{def}{=} \begin{bmatrix} Z_{P1} \\ Z_{P2} \\ Z_{P3} \\ \vdots \\ Z_{PM} \end{bmatrix}_{M\,x\,1} \qquad Z_{\Delta\,capteurs} \stackrel{def}{=} \begin{bmatrix} Z_{\Delta 1} \\ Z_{\Delta 2} \\ Z_{\Delta 3} \\ \vdots \\ Z_{\Delta M} \end{bmatrix}_{M\,x\,1}$$

La pondération sur la voie ponctuelle s'écrit alors :

$$Z_P \stackrel{def}{=} C_n^T(\psi,\theta,\varphi) \cdot Z_{P\,capteurs} \qquad \text{(produit scalaire)}$$

$$Z_P \stackrel{def}{=} C_{1,n}(\psi,\theta,\varphi) \cdot Z_{P1} + C_{2,n}(\psi,\theta,\varphi) \cdot Z_{P2} + \dots + C_{M,n}(\psi,\theta,\varphi) \cdot Z_{PM}$$

La pondération sur la voie Delta (discriminateur de code) s'écrit alors :

$$Z_\Delta \stackrel{def}{=} C_n^T(\psi,\theta,\varphi) \cdot Z_{\Delta\,capteurs} \qquad \text{(produit scalaire)}$$

$$Z_\Delta \stackrel{def}{=} C_{1,n}(\psi,\theta,\varphi) \cdot Z_{\Delta 1} + C_{2,n}(\psi,\theta,\varphi) \cdot Z_{\Delta 2} + \dots + C_{M,n}(\psi,\theta,\varphi) \cdot Z_{\Delta M}$$

Les coefficients de pondération complexes s'écrivent alors :

$$C_n(\psi,\theta,\varphi) \stackrel{def}{=} \begin{bmatrix} C_{1,n}(\psi,\theta,\varphi) \\ C_{2,n}(\psi,\theta,\varphi) \\ C_{3,n}(\psi,\theta,\varphi) \\ \vdots \\ C_{M,n}(\psi,\theta,\varphi) \end{bmatrix}_{M\,x\,1}$$

$$C_{m,n}(\psi,\theta,\varphi) \stackrel{def}{=} A_{capteur\,m}(\sigma_n,\gamma_n) \cdot \exp i(\,\delta_{m,n}(\psi,\theta,\varphi) + B_{capteur\,m}(\sigma_n,\gamma_n)\,)$$

$A_{capteur\,m}(\sigma_n, \gamma_n)$ représentant l'amplitude relative due au capteur m dans la direction du satellite n calculée à partir de la connaissance à priori des diagrammes d'antenne, y compris les atténuations dues aux voies RF analogiques.

$B_{capteur\,m}(\sigma_n, Y_n)$ représentant le déphasage dû au capteur m dans la direction du satellite n calculé à partir de la connaissance à priori des diagrammes d'antenne, y compris les déphasages dus aux voies RF analogiques.

Il est possible d'identifier les biais des capteurs en usine. Mais cela augmente le coût de production de l'équipement (moyens de calibration et temps passé) et ne permet pas de compenser le vieillissement du capteur.

Il est aussi possible d'identifier les déphasages des capteurs grâce aux signaux des satellites par un traitement spécifique (cf document FR 2972809)

Les boucles de poursuite (code et porteuse) sont réalisées de manière logicielle car elles fonctionnent à basse fréquence (typiquement de l'ordre Fw = 50 Hz), elles utilisent des fonctions mathématiques plus complexes, et présentent différents modes (recherche, transition, poursuite, poursuite dégradées, ...)

On utilise un discriminateur de phase :

6

$$D\varphi\,(k) = argument(\,Z_P\,)$$

$$D\varphi\,(k) = arc\ tangente(\,I_P\,,\,Q_P\,) \qquad Z_P = I_P + j.Q_P$$

I représentant la partie réelle, et Q représentant la partie imaginaire

$$D\varphi\,(k) = \theta \qquad\qquad Z_P = \rho e^{i\theta}$$

$\rho$ représentant le module, et $\theta$ représentant l'argument
K représentant l'indice de la période de recalage (typiquement des périodes de 20 ms pour Fw = 50 Hz)

On utilise également un discriminateur de code :

$$D_{code}\,(k) = partie\ réelle(\,Z_\Delta\,.\,Z_{P^*}\,) \qquad Z_{P^*} = conjugué(\,Z_{P^*}\,) = I_P - j.Q_P$$

$$D_{code}\,(k) = I_P\,.\,I_\Delta + j.(\,I_P\,.\,I_\Delta\,)$$

On utilise un correcteur de boucle de phase (PLL pour "Phase Lock Loop" en langue anglaise) :

$$A_{porteuse}(k) = A_{porteuse}(k-1)\;\; + T.K_{porteuse\,3}.\,D\varphi(k)\,.\,\lambda_{porteuse}/(2\pi)\;\;(en\ m/s^2)$$

$$V_{porteuse}(k) = V_{porteuse}(k-1) + TA_{porteuse}(k) + T.K_{porteuse\,2}.\,D\varphi(k)\,.\,\lambda_{porteuse}/(2\pi)\qquad(en\ m/s)$$

$$C_{porteuse}(k) =\;\; V_{porteuse}(k) +\;\; K_{porteuse\,1}.\,D\varphi\,(k)\,.\,\lambda_{porteuse}/(2\pi)\qquad(en\ m/s)$$

On utilise un correcteur de boucle de code (DLL pour "Delay Lock Loop" en langue anglaise) :

$$V_{code}(k)\; = V_{code}\,(k-1) + TA_{code}\,(k)\; + T.K_{code\,2}.\,D_{code}(k)\,.\,L_{chip}\qquad\qquad(en\ m/s)$$

$$C_{code}\,(k) = V_{code}\,(k)\; +\; K_{code\,1}.\,D_{code}(k)\,.\,L_{chip}\qquad\qquad(en\ m/s)$$

Concernant les oscillateurs à commande numérique ou NCO pour "numerically controlled oscillators" en langue anglaise :

$$C_{NCO\ porteuse}\,(k) =\;\; C_{porteuse}(k)\; /\,\lambda_{porteuse}\qquad\qquad(en\ Hz)$$

$$C_{NCO\ code}\,(k)\;\; = (\;C_{porteuse}(k) + C_{code}(k)\;)\,/\,L_{chip}\qquad\qquad(en\ Hz)$$

On se donne un critère à maximiser : La somme sur tous les satellites des énergie des sommes pondérées (i.e. après la formation de faisceau) :

$$\Psi(\varphi,\theta,\psi)\;\overset{def}{=}\;\Sigma_{n=1,..,N}\,\|\,Z_{P\,n}\,(\varphi,\theta,\psi)\,\|^2$$

$$\Psi(\varphi,\theta,\psi)\;\overset{def}{=}\;\Sigma_{n=1,..,N}\,\|\,C_n{}^T(\varphi,\theta,\psi)\,.\,Z_{P\ capteurs\ n}\,\|^2$$

$$\Psi(\varphi,\theta,\psi) \overset{def}{=} \Sigma_{n=1,..,N} [\; C_n^{\ T}(\varphi,\theta,\psi) \, . \, Z_{P\ capteurs\ n} \;] \, . \, [\; C^T(\sigma,\gamma) \, . \, Z_{P\ capteurs\ n}]^*$$

n étant l'indice du satellite

Il est théoriquement possible d'effectuer une recherche systématique dans le domaine des angles d'Euler : Pour chaque hypothèse $(\psi,\theta,\varphi)$ considérée, on calcule les directions supposées d'arrivée des signaux en deuxième repère ou repère capteur, puis le critère à maximiser. On retient les valeurs des angles donnant le critère minimal.

Néanmoins, une recherche complète du domaine dans lequel les angles d'Euler prennent leurs valeurs serait très longue et coûteuse en calcul :

- Le cap $\psi$ prend ses valeurs dans $[0,2\pi]$ ou $[0°,360°]$
- L'assiette $\theta$ prend ses valeurs dans $[-\pi,\pi]$ ou $[-180°,180°]$
- L'inclinaison $\varphi$ prend ses valeurs dans $[-\pi,\pi]$ ou $[-180°,180°]$

Si on échantillonne de 10 degrés en 10° cela fait 36 x 36 x 36 = 46656 hypothèses à traiter.

On préfère faire une recherche itérative en se dirigeant vers le maximum à chaque itération grâce à la méthode du gradient :

$$\begin{bmatrix} \psi_{i+1} \\ \theta_{i+1} \\ \varphi_{i+1} \end{bmatrix} = \begin{bmatrix} \psi_i \\ \theta_i \\ \varphi_i \end{bmatrix} + \alpha \, . \, \vec{Grad}\Phi(\psi_i,\theta_i,\varphi_i)$$

$$\vec{Grad}\Psi(\psi,\theta,\varphi) = \sum_{n=1,..,N} \begin{bmatrix} \dfrac{\partial}{\partial \psi}\left\|Z_{P\,n}(\psi,\theta,\varphi)\right\|^2 \\[2ex] \dfrac{\partial}{\partial \theta}\left\|Z_{P\,n}(\psi,\theta,\varphi)\right\|^2 \\[2ex] \dfrac{\partial}{\partial \varphi}\left\|Z_{P\,n}(\psi,\theta,\varphi)\right\|^2 \end{bmatrix}$$

$$\frac{\partial\left\|Z_{P\,n}(\psi,\theta,\varphi)\right\|^2}{\partial \psi} = \frac{\partial([C_n^{\ T}(\psi,\theta,\varphi).Z_{P\ capteurs\ n}].[C_n^{\ T}(\psi,\theta,\varphi).Z_{P\ capteurs\ n}]^*)}{\partial \psi}$$

$$\frac{\partial\left\|Z_{P\,n}(\psi,\theta,\varphi)\right\|^2}{\partial \psi} = Re([\frac{\partial C_n^{\ T}}{\partial \psi}(\psi,\theta,\varphi).Z_{P\ capteurs\ n}].[C_n^{\ T}(\psi,\theta,\varphi).Z_{P\ capteurs\ n}]^*$$

$$\vec{Grad}\Psi(\psi,\theta,\varphi) = \sum_{n=1,..,N} \begin{bmatrix} Re([\dfrac{\partial C_n^{\ T}}{\partial \psi}(\psi,\theta,\varphi).Z_{P\ capteurs\ n}].[C_n^{\ T}(\psi,\theta,\varphi).Z_{P\ capteurs\ n}]^*) \\[3ex] Re([\dfrac{\partial C_n^{\ T}}{\partial \theta}(\psi,\theta,\varphi).Z_{P\ capteurs\ n}].[C_n^{\ T}(\psi,\theta,\varphi).Z_{P\ capteurs\ n}]^*) \\[3ex] Re([\dfrac{\partial C_n^{\ T}}{\partial \varphi}(\psi,\theta,\varphi).Z_{P\ capteurs\ n}].[C_n^{\ T}(\psi,\theta,\varphi).Z_{P\ capteurs\ n}]^*) \end{bmatrix}$$

Notation : Re(z) représente la partie réelle de z

On calcule des discriminateurs en sortie des corrélateurs pour mesurer les erreurs commises sur les directions des satellites.

On peut aussi prendre comme paramètres de direction d'arrivée des signaux satellites les cosinus directeurs $\alpha$ et $\beta$ sur les axes X et Y du repère antenne ou repère capteur.

Le cosinus directeur sur l'axe Z se déduit grâce à la norme égale à 1. Pour éviter toute ambiguïté sur le signe de Z il faut supposer que les satellites se trouvent toujours au-dessus du plan de l'antenne, donc ignorer les satellites en-dessous. Cela est légitime dans la mesure où les satellites bas en repère capteur ne sont pas exploitables pour la détermination des directions d'arrivée à cause de gains d'antenne inadaptés à un angle de site bas.

$$\vec{u}_{capteurs}(\alpha,\beta) \overset{def}{=} \begin{bmatrix} \alpha \\ \beta \\ \sqrt{1-\alpha^2-\beta^2} \end{bmatrix} \overset{def}{=} \begin{bmatrix} ux(\alpha,\beta) \\ uy(\alpha,\beta) \\ uz(\alpha,\beta) \end{bmatrix}$$

On calcule le déphasage pour des cosinus directeurs variables. On commence par le calcul de différence de chemin optique :

$$\varepsilon_m(\alpha,\beta) \overset{def}{=} \vec{u}_{capteurs}(\alpha,\beta) \cdot \vec{r}_{m\ capteurs} \quad \text{(en m)}$$

et le déphasage correspondant :

$$\delta_m(\alpha,\beta) \overset{def}{=} \vec{u}_{capteurs}(\alpha,\beta) \cdot \vec{r}_{m\ capteurs} \cdot (2\pi/\lambda) \quad \text{(en rad)}$$

D'ou les coefficients de pondération complexes :

$$C_n(\alpha,\beta) \overset{def}{=} \begin{bmatrix} C_{1,n}(\alpha,\beta) \\ C_{2,n}(\alpha,\beta) \\ C_{3,n}(\alpha,\beta) \\ \vdots \\ C_{M,n}(\alpha,\beta) \end{bmatrix}_{M\,x\,1}$$

$$C_m(\alpha,\beta) \overset{def}{=} A_{capteur\ m}(\sigma(\alpha,\beta),\gamma(\alpha,\beta)) \cdot \exp i(\delta_m(\alpha,\beta) + B_{capteur\ m}(\sigma(\alpha,\beta),\gamma(\alpha,\beta)))$$

$$\sigma(\alpha,\beta) = \tan^{-1}(\sqrt{\alpha^2+\beta^2}, \sqrt{1-\alpha^2+\beta^2})$$

$$\gamma(\alpha,\beta) = \tan^{-1}(\alpha, \beta)$$

L'utilisation de l'indice n disparaît car la position du satellite n'intervient plus à partir du moment où on utilise les cosinus directeur $\alpha$ et $\beta$ variables.

Les dérivées, par rapport aux cosinus directeurs, des puissances des sommes pondérées complexes fait apparaître la partie réelle du produits de sommes pondérées « delta » par le conjugué complexe de la somme pondérée « ponctuelle » :

$$\frac{\partial \|Z_{Pn}(\alpha,\beta)\|^2}{\partial \alpha} = \frac{\partial([C_n^T(\alpha,\beta).Z_{P\ capteurs\ n}].[C_n^T(\alpha,\beta).Z_{P\ capteurs\ n}]^*)}{\partial \alpha}$$

$$\frac{\partial \|Z_{P\,n}(\alpha,\beta)\|^2}{\partial \alpha} = 2.\mathrm{Re}\left([\frac{\partial C_n^{\,T}}{\partial \alpha}(\alpha,\beta).Z_{P\,capteurs\,n}].[C_n^{\,T}(\alpha,\beta).Z_{P\,capteurs\,n}]^*\right)$$

$$\frac{\partial \|Z_{P\,n}(\alpha,\beta)\|^2}{\partial \alpha} = 2.\mathrm{Re}\left(Z_{a\,n}(\alpha,\beta).Z_{P\,n}(\alpha,\beta)^*\right)$$

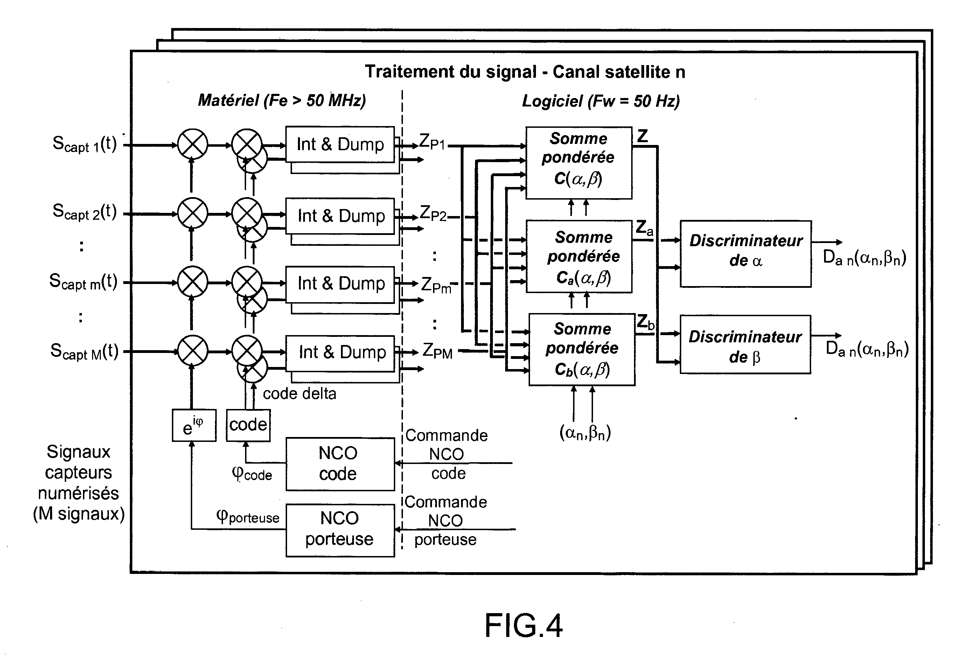

Sur ce principe on calcule des discriminateurs d'erreur de cosinus directeurs conformément à la figure 4 :

$$D_{a\,n}(\alpha,\beta) \overset{def}{=} \mathrm{Re}[\,Z_{a\,n}(\alpha,\beta)\,.\,Z_{P\,n}(\alpha,\beta)^*\,]\, /\, \|\,Z\,\|^2\, /\, \rho_a\ =\ \mathrm{Re}(\,Z_a\,/\,Z^*\,)\,/\,\rho_a$$

$$D_{b\,n}(\alpha,\beta) \overset{def}{=} \mathrm{Re}[\,Z_{b\,n}(\alpha,\beta)\,.\,Z_{P\,n}(\alpha,\beta)^*\,]\, /\, \|\,Z\,\|^2\, /\, \rho_b\ =\ \mathrm{Re}(\,Z_b\,/\,Z^*\,)\,/\,\rho_b$$

On utilise la somme pondérée "ponctuelle" :

$$Z_{P\,n}(\alpha,\beta) \overset{def}{=} C^T(\alpha,\beta).Z_{P\,n\,capteurs}$$

Et les sommes pondérées "delta" :

$$Z_{a\,n}(\alpha,\beta) \overset{def}{=} C_a^{\,T}(\alpha,\beta).Z_{P\,n\,capteurs} \qquad C_a(\alpha,\beta) \overset{def}{=} \frac{\partial C^T}{\partial \alpha}(\alpha,\beta)$$

$$Z_{b\,n}(\alpha,\beta) \overset{def}{=} C_b^{\,T}(\alpha,\beta).Z_{P\,n\,capteurs} \qquad C_b(\alpha,\beta) \overset{def}{=} \frac{\partial C^T}{\partial \beta}(\alpha,\beta)$$

Pour calculer la sensibilité des discriminateurs, on pose :

$$\Pi(\alpha,\beta) \overset{def}{=} C^T(\alpha,\beta).C(\alpha_0,\beta_0)$$

$$\Delta_a(\alpha,\beta) \overset{def}{=} \frac{\partial C^T}{\partial \alpha}(\alpha,\beta).C(\alpha_0,\beta_0)$$

$$\Delta_b(\alpha,\beta) \overset{def}{=} \frac{\partial C^T}{\partial \beta}(\alpha,\beta).C(\alpha_0,\beta_0)$$

Le signal reçu s'exprime:

$$Z_{P\,capteurs} = C(\alpha_{vrai},\beta_{vrai}).T.\sqrt{P} + \text{bruit}$$

P représentant la puissance du signal reçue, et
T représentant le temps d'intégration cohérente
Le vecteur $C(\alpha_{vrai},\beta_{vrai})$ est représentatif des amplitudes complexes reçues sur chaque capteur. Les angles

($\alpha_{vrai}$,$\beta_{vrai}$) correspondent à la direction vraie donc au maximum de $\Psi(\alpha,\beta)$. Dans l'hypothèse où on connaît ($\alpha_{vrai}$,$\beta_{vrai}$), en posant ($\alpha_0$,$\beta_0$) = ($\alpha_{vrai}$,$\beta_{vrai}$) on a :

$$Z(\alpha,\beta) = C^T(\alpha,\beta).C(\alpha_{vrai},\beta_{vrai}).T.\sqrt{P}$$

$$Z_a(\alpha,\beta) = \frac{\partial C^T}{\partial \alpha}(\alpha,\beta).C(\alpha_{vrai},\beta_{vrai}).T.\sqrt{P}$$

$$Z_b(\alpha,\beta) = \frac{\partial C^T}{\partial \beta}(\alpha,\beta).C(\alpha_{vrai},\beta_{vrai}).T.\sqrt{P}$$

Dans l'hypothèse où on connaît ($\alpha_{vrai}$,$\beta_{vrai}$), en posant ($\alpha_0$,$\beta_0$) = ($\alpha_{vrai}$,$\beta_{vrai}$) on a :

$$Z(\alpha,\beta) = \Pi(\alpha,\beta).T.\sqrt{P}$$

$$Z_a(\alpha,\beta) = \Delta_a(\alpha,\beta).T.\sqrt{P}$$

$$Z_b(\alpha,\beta) = \Delta_b(\alpha,\beta).T.\sqrt{P}$$

D'où :

$$D_a(\alpha,\beta) = Re[\Delta_a.\Pi] / \|\Pi\|^2 / \rho_a$$

$$D_b(\alpha,\beta) = Re[\Delta_b.\Pi] / \|\Pi\|^2 / \rho_b$$

Pour normaliser la sensibilité des discriminateurs à 1 on pose :

$$\rho_a \overset{def}{=} \frac{\partial}{\partial \alpha}(Re[\Delta_a.\Pi] / \|\Pi\|^2)(\alpha_0,\beta_0)$$

$$\rho_b \overset{def}{=} \frac{\partial}{\partial \beta}(Re[\Delta_b.\Pi] / \|\Pi\|^2)(\alpha_0,\beta_0)$$

pour des valeurs ($\alpha_0$,$\beta_0$) correspondant aux dernière estimées de ($\alpha$,$\beta$)

Ainsi si les valeurs de ($\alpha$, $\beta$) sont proches des vraies valeurs ($\alpha_{vrai\,n}$, $\beta_{vrai\,n}$) :

$$D_{a\,n}(\alpha,\beta) \cong (\alpha - \alpha_{vrai\,n}) + bruit$$

$$D_{b\,n}(\alpha,\beta) \cong (\beta - \beta_{vrai\,n}) + bruit$$

On utilise également un modèle d'observation.

La relation entre les cosinus directeurs ($\alpha_n$,$\beta_n$) et les angles d'Euler ($\psi,\theta,\varphi$) n'étant pas linéaire, on linéarise cette relation autour d'un point de fonctionnement ($\psi,\theta,\varphi$) pour établir un modèle d'observation linéaire :

$$d\alpha_n \overset{def}{=} \alpha_n(\psi + d\psi, \theta + d\theta, \varphi + d\varphi) - \alpha_n(\psi, \theta, \varphi)$$

$$d\beta_n \overset{def}{=} \beta_n(\psi + d\psi, \theta + d\theta, \varphi + d\varphi) - \beta_n(\psi, \theta, \varphi)$$

$$d\alpha_n = \frac{\partial ux_n}{\partial \psi}(\psi, \theta, \varphi).d\psi \ + \ \frac{\partial ux_n}{\partial \theta}(\psi, \theta, \varphi).d\theta \ + \ \frac{\partial ux_n}{\partial \varphi}(\psi, \theta, \varphi).d\varphi$$

$$d\beta_n = \frac{\partial uy_n}{\partial \psi}(\psi, \theta, \varphi).d\psi \ + \ \frac{\partial uy_n}{\partial \theta}(\psi, \theta, \varphi).d\theta \ + \ \frac{\partial uy_n}{\partial \varphi}(\psi, \theta, \varphi).d\varphi$$

Pour le calcul des dérivées partielles on peut utiliser la méthode des différences finies :

$$\frac{\partial ux_n}{\partial \psi}(\psi, \theta, \varphi) = \left( \partial ux_n(\psi + d\psi, \theta, \varphi) - \partial ux_n(\psi, \theta, \varphi) \right)/d\psi$$

En utilisant d'autre notations :

$$d\alpha_n = a_{n,1} \ .d\psi \ + \ a_{n,2} \ .d\theta \ + \ a_{n,3} \ .d\varphi$$

$$d\beta_n = b_{n,1} \ .d\psi \ + \ b_{n,2} \ .d\theta \ + \ b_{n,3} \ .d\varphi$$

Si on considère tous les satellites visibles on a 2.N équations pour 3 inconnues.

$$\begin{bmatrix} d\alpha_1 \\ d\beta_1 \\ \vdots \\ d\alpha_N \\ d\beta_N \end{bmatrix} = \begin{bmatrix} a_{1,1} & a_{1,2} & a_{1,3} \\ b_{1,2} & b_{1,2} & b_{1,3} \\ \vdots & \vdots & \vdots \\ a_{N,1} & a_{N,2} & a_{N,3} \\ b_{N,1} & b_{N,2} & b_{N,3} \end{bmatrix} \begin{bmatrix} d\varphi \\ d\theta \\ d\psi \end{bmatrix}$$

soit:

$$\begin{bmatrix} d\alpha_1 \\ d\beta_1 \\ \vdots \\ d\alpha_N \\ d\beta_N \end{bmatrix} = H \begin{bmatrix} d\varphi \\ d\theta \\ d\psi \end{bmatrix} \quad \text{avec } H = \begin{bmatrix} a_{1,1} & a_{1,2} & a_{1,3} \\ b_{1,2} & b_{1,2} & b_{1,3} \\ \vdots & \vdots & \vdots \\ a_{N,1} & a_{N,2} & a_{N,3} \\ b_{N,1} & b_{N,2} & b_{N,3} \end{bmatrix}$$

On cherche à remonter aux erreurs sur les angles d'Euler ($d\psi = \psi - \psi_{vrai}$ , $d\theta = \theta - \theta_{vrai}$, $d\varphi = \varphi - \varphi_{vrai}$) à partir des erreurs sur les cosinus directeurs ( $d\alpha_n = \alpha_n(\psi,\theta,\varphi) - \alpha_{vrai\,n}$, $d\beta_n = \beta_n(\psi,\theta,\varphi) - \beta_{vrai\,n}$)

Les erreurs sur les cosinus directeurs sont observables grâce aux discriminateurs :

$$d\alpha_n = \alpha_n(\psi,\theta,\varphi) - \alpha_{vrai\,n} = D_{a\,n}(\alpha_n(\psi,\theta,\varphi), \beta_n(\psi,\theta,\varphi)) + bruit$$

$$d\beta_n = \beta_n(\psi,\theta,\varphi) - \beta_{vrai\,n} = D_{b\,n}(\alpha_n(\psi,\theta,\varphi), \beta_n(\psi,\theta,\varphi)) + bruit$$

Aussi, on peut utiliser une résolution par les moindres carrés :

$$\begin{bmatrix} d\varphi_{estimé} \\ d\theta_{estimé} \\ d\psi_{estimé} \end{bmatrix} = H * \begin{bmatrix} d\alpha_1 \\ d\beta_1 \\ : \\ d\alpha_N \\ d\beta_N \end{bmatrix}$$

avec $H^* = (H^T W^T W H)^{-1} H^T W^T$ pour pseudo-inverse.

La matrice W permet de pondérer les mesures en fonction du rapport signal sur bruit estimé sur chaque signal satellite.

$$W = \begin{bmatrix} 1/\sigma_{a1}^2 & 0 & .. & .. & 0 \\ 0 & 1/\sigma_{b1}^2 & . & & : \\ : & & . & . & : \\ : & & & . & 1/\sigma_{aN}^2 & 0 \\ 0 & .. & .. & 0 & 1/\sigma_{bN}^2 \end{bmatrix}$$

$$\sigma_{a\,n}^2 = \sigma_{b\,n}^2 = \frac{1}{C/N_{0\,estimé\,n}}$$

Après la résolution on corrige les angles d'Euler estimés a priori :

$$\begin{bmatrix} \varphi_{estimé} \\ \theta_{estimé} \\ \psi_{estimé} \end{bmatrix} = \begin{bmatrix} \varphi_{estimé\;précédent} \\ \theta_{estimé\;précédent} \\ \psi_{estimé\;précédent} \end{bmatrix} + \begin{bmatrix} d\varphi_{estimé} \\ d\theta_{estimé} \\ d\psi_{estimé} \end{bmatrix}$$

En variante des moindres carrés, on peut utiliser une résolution par filtre de Kalman (étendu), comme suit :

Etat :

Réel : $\quad X_i = \begin{bmatrix} \varphi_i \\ \theta_i \\ \psi_i \end{bmatrix}$ Estimé : $\quad X_{i/i} = \begin{bmatrix} \varphi_{estimé\;i} \\ \theta_{estimé\;i} \\ \psi_{estimé\;i} \end{bmatrix}$ à l'instant i

Initialisation :

$$X_{0/0} = \begin{bmatrix} \varphi_{estimé\;initial} \\ \theta_{estimé\;initial} \\ \psi_{estimé\;initial} \end{bmatrix} \qquad P_{0/0} = \begin{bmatrix} \infty & 0 & 0 \\ 0 & \infty & 0 \\ 0 & 0 & \infty \end{bmatrix}$$

Propagation :

$$X_{i/i-1} = X_{i-1/i-1} \qquad \text{Vecteur d'état propagé}$$
$$P_{i/i-1} = P_{i-1/i-1} + Q_i \qquad \text{Matrice de covariance propagée}$$

$$Q_i = \begin{bmatrix} q_\varphi & 0 & 0 \\ 0 & q_\theta & 0 \\ 0 & 0 & q_\psi \end{bmatrix} \qquad \text{Bruit d'état}$$

Le bruit d'état est choisi en fonction de la dynamique sur l'attitude du porteur.

Recalage :

$$Y_i = \begin{bmatrix} d\alpha_1 \\ d\beta_1 \\ : \\ d\alpha_N \\ d\beta_N \end{bmatrix}$$

$$H_i = \begin{bmatrix} a_{1,1} & a_{1,2} & a_{1,3} \\ b_{1,2} & b_{1,2} & b_{1,3} \\ : & : & : \\ a_{N,1} & a_{N,2} & a_{N,3} \\ b_{N,1} & b_{N,2} & b_{N,3} \end{bmatrix}$$

$$R_i = \begin{bmatrix} \sigma_{a1}^2 & 0 & .. & .. & 0 \\ 0 & \sigma_{b1}^2 & . & & : \\ : & & . & . & : \\ : & & & \sigma_{aN}^2 & 0 \\ 0 & .. & .. & 0 & \sigma_{bN}^2 \end{bmatrix}$$

L'innovation $Y_i = Z_i - HX_{i/i-1}$ est déjà contenue dans les discriminateurs, il n'est pas nécessaire de la recalculer.

$$K_i = (H_i P_{i/i-1} H_i^T + R_i)^{-1} P_{i/i-1} H_i^T \qquad \text{Gain de recalage}$$
$$X_{i/i} = X_{i/i-1} + K_i . Y_i \qquad \text{Vecteur d'état recalé}$$
$$P_{i/i} = (Id - K_i H_i) . P_{i/i-1} \qquad \text{Matrice de covariance recalée}$$

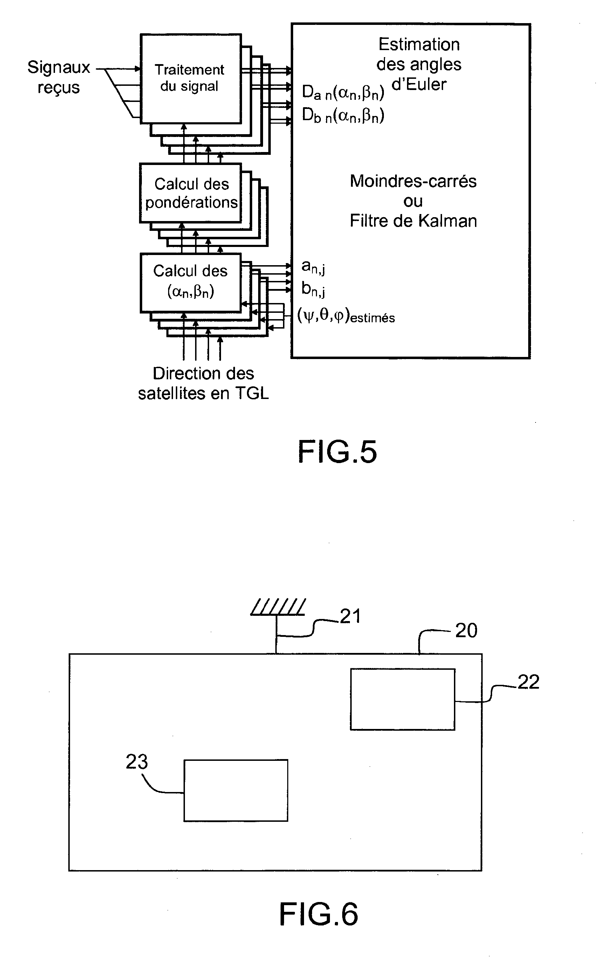

Le synoptique de la figure 5 illustre ce qui précède.

Sur la figure 6 est illustré un récepteur 20 de signaux d'un système de navigation par satellites, muni d'une antenne 21 à capteurs à rayonnement contrôlé, comprenant des moyens de formation de faisceaux 22 pour améliorer la résistance au brouillage, comprenant des moyens de détermination 23 de l'attitude de l'antenne dans un repère TGL centré sur le récepteur, par détermination itérative des angles d'attitude de l'antenne donnant le maximum de la somme des énergies des sommes pondérées des signaux reçus par les capteurs en sortie des corrélateurs des canaux de traitement respectivement associés aux satellites, les coefficients de pondération des sommes pondérées étant calculés à partir des angles d'attitude considérés à chaque itération et des positions des satellites connues en repère TGL.

Un tel récepteur met en oeuvre le procédé précédemment décrit.

Dans la présente demande, les notations utilisées ont pour définitions :

$$\text{expi}(\varphi) = \exp(j.\varphi) = e^{j\varphi} \qquad (j^2 = -1)$$

Définitions :

$F_r$ : Fréquence résiduelle des signaux numérisés en bande de base ($F_r$ petit devant Fe)
$Dop_n$ : Doppler sur le signal satellite n
$\varphi_{m,n}$ : Déphasage du signal satellite n sur le capteur m
$C_n(t)$ : code d'étalement du satellite n
$Ret_n$ : retard du signal satellite n
$R(\tau)$ : Fonction d'autocorrélation du code

$$R(\tau) = 1 - |\tau| \quad \text{si } |\tau| < 1 \quad R(\tau=0) = 1$$
$$R(\tau) = 0 \qquad \text{sinon}$$

$R_{n,n}(\tau) = {}^1/_L \int_{[kL, (k+1)L]} C_n(u). C_n(u + \tau)\, du = R(\tau)$ pour L grand (>1000) et quel que soit k
$R_{n,p}(\tau) = {}^1/_L \int_{[kL, (k+1)L]} C_n(u). C_p(u + \tau)\, du \cong 0$ si $p \neq n$

Signaux reçus :

Le signal reçu sur l'antenne est la somme des signaux reçus des satellites visibles plus du bruit

$$S_{\text{reçu } m}(t) = \Sigma_{n=1,..,N} S_{\text{reçu } m,n}(t) + \text{bruit}$$

Signal reçu du satellite n sur le capteur m :

$$S_{\text{reçu } m,n}(t) = A.\text{expi}(\varphi_{\text{porteuse reçu } m,n}(t)) . C_n(\varphi_{\text{code reçu } n}(t))$$

$$S_{\text{reçu } m,n}(t) = A.\text{expi}(2\pi.(F_r+Dop_n).t + \theta_{m,n}) . C_n(F_{\text{code}}.(t+Ret_n))$$

Signal local dans le canal n :

$$S_{\text{local } n}(t) = \text{expi}(-\varphi_{\text{porteuse locale } n}(t)) . C_n(\varphi_{\text{code local } n}(t))$$

$$S_{\text{local } n}(t) = \text{expi}(-2\pi.(F_r+Dop_n).t - \theta_n) . C_n(F_{\text{code}}.(t+Ret_n) + \tau)$$

Corrélations :

$$Z_{m,n} = {}^1/_T \int_{[kT,(k+1)T]} S_{\text{reçu } m}(t) . S_{\text{local } n}(t)\, dt$$

T : temps d'intégration cohérent (typiquement T = 20 ms)
Les codes satellites étant décorrélés ($R_{n,p}(\tau) \cong 0$) on peut écrire :

$$Z_{m,n}(k) = {}^1/_T \int_{[kT,(k+1)T]} S_{\text{reçu } m,n}(t) \cdot S_{\text{local } n}(t)\ dt\ +\ \text{bruit}$$

$$Z_{m,n}(k) = {}^1/_T \int_{[kT,(k+1)T]} \text{expi}(\varphi_{\text{port reçue } m,n}(t) - \varphi_{\text{port locale } n}(t)) \cdot C_n(\varphi_{\text{code reçu } n}(t)) \cdot C_n(\varphi_{\text{code local } n}(t)) \cdot dt$$

$$Z_{m,n}(k) = A \cdot \text{expi}(\theta_{m,n} - \theta_n) \cdot {}^1/_L \int_{[kL,(k+1)L]} C_n(u + \tau) \cdot C_n(u)\ du\ +\ \text{bruit}$$

$$Z_{m,n}(k) = A \cdot \text{expi}(\theta_{m,n} - \theta_n) \cdot R(\tau)\ +\ \text{bruit}$$

On suppose que le code local du canal n est en phase avec le code reçu du satellite n, grâce à la boucle de code, réalisée suivant l'état de l'art. D'où $\tau = 0$ et $R(\tau) = 1$

$$Z_{m,n}(k) = A \cdot \text{expi}(\theta_{m,n} - \theta_n)\ +\ \text{bruit}$$

## Revendications

1.  Procédé de formation de faisceau de signaux d'un récepteur (20) de signaux d'un système de navigation par satellites pour améliorer la résistance au brouillage, le récepteur (20) étant muni d'une antenne (21) à plusieurs capteurs à rayonnement contrôlé, **caractérisé en ce qu'**il comprend une étape consistant à déterminer l'attitude de l'antenne dans un repère Trièdre Géographique Local d'acronyme TGL centré sur le récepteur, par détermination itérative des angles d'attitude de l'antenne donnant le maximum de la somme des énergies des sommes pondérées des signaux reçus par les capteurs en sortie des corrélateurs des canaux de traitement respectivement associés aux satellites, les coefficients de pondération des sommes pondérées étant calculés à partir des angles d'attitude considérés à chaque itération et des positions des satellites connues en repère TGL.

2.  Procédé selon la revendication 1, dans lequel on utilise des discriminateurs de paramètres représentatifs des directions d'arrivée des signaux satellites dans un repère lié à l'antenne.

3.  Procédé selon la revendication 2, dans lequel lesdits paramètres représentatifs des directions d'arrivée des signaux satellites dans un repère lié à l'antenne comprennent des cosinus directeurs ou des angles de site et d'azimut.

4.  Procédé selon la revendication 2 ou 3, dans lequel on utilise une méthode à modèle d'observation de la relation entre les paramètres représentatifs des directions d'arrivée des signaux satellites et les angles d'attitude de l'antenne.

5.  Procédé selon la revendication 4, dans lequel la résolution à modèle d'observation met en oeuvre un filtrage de Kalman.

6.  Procédé selon la revendication 4, dans lequel la résolution à modèle d'observation met en oeuvre une méthode par moindres carrés.

7.  Récepteur (20) de signaux d'un système de navigation par satellites, muni d'une antenne (21) à capteurs à rayonnement contrôlé, comprenant des moyens de formation de faisceaux (22) pour améliorer la résistance au brouillage, **caractérisé en ce qu'**il comprend des moyens de détermination (23) de l'attitude de l'antenne dans un repère Trièdre Géographique Local d'acronyme TGL centré sur le récepteur, par détermination itérative des angles d'attitude de l'antenne donnant le maximum de la somme des énergies des sommes pondérées des signaux reçus par les capteurs en sortie des corrélateurs des canaux de traitement respectivement associés aux satellites, les coefficients de pondération des sommes pondérées étant calculés à partir des angles d'attitude considérés à chaque itération et des positions des satellites connues en repère TGL.

**Patentansprüche**

1. Verfahren zur Bildung eines Strahlsignals in einem Signalempfänger (20) eines Satellitennavigationssystems zur Verbesserung der Stömesistenz, wobei der Empfänger (20) mit einer Antenne (21) mit mehreren Sensoren mit kontrollierter Strahlung ausgestattet ist, **dadurch gekennzeichnet, dass** es einen Schritt umfasst, der darin besteht, die Stellung der Antenne in einem auf den Empfänger zentrierten lokalen geografischen Trieder-Bezug (TGL) durch iterative Bestimmung der Stellungswinkel der Antenne zu bestimmen, woraus sich das Maximum der Summe der Energien der gewichteten Summen der von den Sensoren empfangenen Signalen ausgehend von den Korrelatoren der jeweils den Satelliten zugeordneten Verarbeitungskanälen ergibt, wobei die Wichtungskoeffizienten der gewichteten Summen auf der Basis der bei jeder Iteration berücksichtigen Stellungswinkel und der im TGL-Bezug bekannten Satellitenpositionen berechnet werden.

2. Verfahren nach Anspruch 1, wobei für Ankunftsrichtungen der Satellitensignale in einem mit der Antenne verbundenen Bezug repräsentative Parameterdiskriminatoren verwendet werden.

3. Verfahren nach Anspruch 2, wobei die für Ankunftsrichtungen der Satellitensignale in einem mit der Antenne verbundenen Bezug repräsentativen Parameter Lenkcosinus oder Elevations- und Azimutwinkel umfassen.

4. Verfahren nach Anspruch 2 oder 3, wobei eine Modellobservationsmethode des Verhältnisses zwischen den für die Ankunftsrichtungen der Satellitensignale repräsentativen Parametern und den Stellungswinkeln der Antenne verwendet wird.

5. Verfahren nach Anspruch 4, wobei die Modellobservationslösung einen Kaiman-Filter umsetzt.

6. Verfahren nach Anspruch 4, wobei die Modellobsemationslösung eine Methode der kleinsten Quadrate umsetzt.

7. Signalempfänger (20) eines Satellitennavigationssystems, ausgestattet mit einer Antenne (21) mit Sensoren mit kontrollierter Strahlung, umfassend Strahlenbildungsmittel (22) zur Verbesserung der Stömesistenz, **dadurch gekennzeichnet, dass** er Bestimmungsmittel (23) der Stellung der Antenne in einem auf den Empfänger zentrieren lokalen geografischen Trieder-Bezug (TGL) durch iterative Bestimmung der Stellungswinkel der Antenne umfasst, woraus sich das Maximum der Summe der Energien der gewichteten Summen der von den Sensoren empfangenen Signalen ausgehend von den Korrelatoren der jeweils den Satelliten zugeordneten Verarbeitungskanälen ergibt, wobei die Wichtungskoeffizienten der gewichteten Summen auf der Basis der bei jeder Iteration berücksichtigen Stellungswinkel und den im TGL-Bezug bekannten Satellitenpositionen berechnet werden.

**Claims**

1. A method for the formation of a signal array from a receiver (20) of signals from a satellite navigation system in order to improve the resistance to scrambling, the receiver (20) being equipped with an antenna (21) having several controlled reception pattern sensors, **characterised in that** it comprises a step consisting of determining the attitude of the antenna in a Local Geographic Trihedron - acronym LGT - reference frame centred on the receiver, by iterative determination of the attitude angles of the antenna yielding the maximum of the sum of the energies of the weighted sums of the signals received by the sensors at the output of the correlators of the processing channels respectively associated with the satellites, the weighting coefficients of the weighted sums being calculated from the attitude angles considered at each iteration and from the known positions of the satellites in the LGT reference frame.

2. The method according to Claim 1, wherein parameter discriminators are used that are representative of the directions of arrival of the satellite signals in a reference frame linked to the antenna.

3. The method according to Claim 2, wherein said parameters representative of the directions of arrival of the satellite signals in a reference frame linked to the antenna comprise direction cosines or elevation and azimuthal angles.

4. The method according to Claim 2 or 3, wherein a method is used based on an obsemational model of the relationship between the parameters representative of the directions of arrival of the satellite signals and the attitude angles of the antenna.

5. The method according to Claim 4, wherein the solution based on an obsemational model implements Kalman filtering

6. The method according to Claim 4, wherein the solution based on an obsemational model implements a least squares method.

7. A receiver (20) for signals from a satellite navigation system, equipped with an antenna (21) using controlled reception pattern sensors, comprising means (22) for the formation of arrays in order to improve the resistance to scrambling, **characterised in that** it comprises means (23) for determining the attitude of the antenna in a Local Geographic Tuhedron - acronym LGT - reference frame centred on the receiver, by iterative determination of the attitude angles of the antenna yielding the maximum of the sum of the energies of the weighted sums of the signals received by the sensors at the output of the correlators of the processing channels respectively associated with the satellites, the weighting coefficients of the weighted sums being calculated from the attitude angles considered at each iteration and from the known positions of the satellites in the LGT reference frame.

# FIG.1

# FIG.2

**FIG.3**

**Traitement du signal - Canal satellite n**

*Matériel (Fe > 50 MHz)*

*Logiciel (Fw = 50 Hz)*

FIG.4

Estimation
des angles
d'Euler

$D_{a\ n}(\alpha_n,\beta_n)$
$D_{b\ n}(\alpha_n,\beta_n)$

Moindres-carrés
ou
Filtre de Kalman

$a_{n,j}$
$b_{n,j}$
$(\psi,\theta,\varphi)_{estimés}$

Signaux
reçus

Traitement
du signal

Calcul des
pondérations

Calcul des
$(\alpha_n,\beta_n)$

Direction des
satellites en TGL

## FIG.5

## FIG.6

**EP 2 784 546 B1**

## RÉFÉRENCES CITÉES DANS LA DESCRIPTION

### Documents brevets cités dans la description

- US 2002169578 A1
- FR 2972809